# EUROPÄISCHE PATENTSCHRIFT

(11) **EP 0 539 844 B1**
(45) Veröffentlichungstag und Bekanntmachung des Hinweises auf die Patenterteilung: **11.05.1994**
(21) Anmeldenummer: 92117893.5
(22) Anmeldetag: 20.10.1992
(51) Int. Cl.: F16L 33/207

(54) **Klemmverbinder für Rohre oder Schläuche aus polymerem Werkstoff**
Clamping connector for rigid pipes or hoses made of polymer
Raccord de serrage pour tuyaux rigides ou flexibles en matière polymère

(30) Priorität: 26.10.1991 DE 4135422
(43) Veröffentlichungstag der Anmeldung: 05.05.1993
(73) Patentinhaber: REHAU AG + Co, 95111 Rehau (DE)
(72) Erfinder: Rissmann, Eckehard, c/o REHAU AG + Co, W-8673 Rehau (DE)

(56) Entgegenhaltungen:
- FR-A- 905 791
- GB-A- 828 912
- US-A- 2 310 536
- US-A- 3 610 665

## Beschreibung

Die Erfindung betrifft einen zweiteiligen metallischen Klemmverbinder in einer Verbindung von Rohren oder Schläuchen gemäß Oberbegriff von Anspruch 1 und wie aus der DE-A-38 13 815 bekannt.

Die Klemmverbinder nach dem Stand der Technik (US-A-4 293 147, DE-A-36 08 843, DE-A-38 13 815) weisen als gemeinsame Merkmale eine mit einer zylindrischen, gerippten, durch einen Bunde begrenzten Stützhülse auf, auf welche sich eine am Rohr- oder Schlauchende angeformte Muffe stecken läßt und einer auf das Rohr oder den Schlauch gesteckten, mit ihrer aufgekelchten Öffnung zur Muffe hin gerichteten verschiebbaren Klemmhülse, die zur Herstellung der Verbindung über die aufgesteckte Muffe gepreßt wird, wobei die Bohrung der Klemmhülse so ausgebildet ist, daß vom Rohr- oder Schlauchmaterial der Muffe sämtliche Hohlräume zwischen Stützhülse und Klemmhülse verfüllt werden.

Aus der FR-A 905 791 ist ein ferner Klemmverbinder für Schläuche bekannt, bei dem die Klemmhülse als Kraftvermittler wirkt. Die Klemmkraft wird dabei durch einen Schiebering aufgebracht. Die Klemmhülse ist vor dem Beginn des Verschiebevorganges des Ringes bereits über dem in das Schlauchlumen eingesetzten Verbindungsstück. Bei dem Verschieben des Ringes auf dem äußeren Umfang des Klemmhülse wird diese axial zusammengedrückt und preßt dabei den Schlauch auf dem Verbindungsstück fest. Die Klemmhülse wird dabei auch geringfügig axial verschoben -durch die Schiebekraft des Ringes- stößt dabei auf eine Schräge am Bund des Verbindungsstückes, wird in eine an die Schräge anschließende Vertiefung gedrückt und legt so zusätzlich die Klemmhülse auf dem Schlauch fest.

Einachsige Klemmverbinder werden in der Regel durch Drehen hergestellt. Als Ausgangsmaterial dient eine Profilstange. Je kleiner der Bund ist, desto kleiner kann auch die Profilstange gewählt werden. Besonders bei Fittingen mit Klemmverbindung auf der einen und einem Gewinde auf der anderen Seite wird gerne eine Stange mit einem Vielkantprofil gewählt, das unbearbeitet stehen bleibt und als Angriff für das Werkzeug zum Herstellen der Gewindeverbindung dient. Es ist heute nicht mehr üblich, mit Gabelschlüsseln zu arbeiten. Bei der Verwendung von Wasserpumpenzangen kann jedoch auf genormte Schlüsselweiten verzichtet werden. So kann die Vielkantprofilstange im Durchmesser wie das Gewinde vorgesehen werden. Bestimmend für die zu wählende Größe der Profilstange ist vielfach nur der Bund.

Mehrachsige Klemmverbinder werden in der Regel durch Gesenkschmieden und Gießen mit anschließender spanabhebender Bearbeitung hergestellt. Auch hier sind hohe Bunde und zudem noch steile Bunde, wie sie sich bei Ausführungen nach dem Stand der Technik darstellen, unvorteilhaft.

Bei der Herstellung der Klemmverbinder durch Gesenkschmieden, besteht die Gefahr von Faltenbildungen und Überlappungen, die die Funktion des Klemmverbinders in Frage stellen können. Hängenbleiben des Rohlings in der Form ist auch möglich : Der sich rasch abkühlende, zwischen den Bunden in der Formhälfte fixierte Rohling kann mehr oder weniger sichtbar einreißen. Außerdem ist eine Presse entsprechender Leistung notwendig, um die am Rohling dominierende Höhe auszuschmieden.

Bei der Herstellung der Klemmverbinder durch Gießen, besteht die Gefahr, daß sich Luft, Schlacken, Formrückstände usw. ansammeln können, die die Funktion des Produktes in Frage stellen können. Bunde können innerhalb des Gußstückes Materialanhäufungen darstellen. Beim Abkühlen des Rohlings erstarrt zunächst die Außenhaut, so daß auf der Bohrungsseite von Materialanhäufungen schrumpfbedingte Einfallstellen entstehen können, die zur Vermeidung von Wandschwächungen letztlich mit erhöhtem Aufwand an Gußform und Material ausgeglichen werden müssen.

Vorbeschriebene Herstellungsverfahren für den Klemmverbinder haben Schwierigkeiten mit den üblichen, relativ hohen Bund.

Zur Dichtwirkung des Klemmverbinders trägt der Anschlag der fliegend gelagerten Klemmhülse am Bund nicht bei. Rohre und Schläuche aus polymerem Werkstoff können nicht mit einer rundum gleichdicken Wandung gefertigt werden. Die Klemmhülse kann deshalb nie vollkommen fluchtend mit der Achse aufgepreßt werden: sie stellt sich schief. Dort, wo es zum Kontakt der Klemmhülse mit dem Bund kommt, bildet sich auf der Gegenseite des Umfangs ein Spalt. Bei schiefem Ansatz der Klemmhülse am Werkzeug, der sich nicht immer vermeiden läßt, wird sich ebenfalls ein Spalt zwischen der Klemmhülse und dem Bund auftun. Es sind weder optische noch technische Vorteile dieser bekannten Ausführungen erkennbar. Für den Ansatz des Werkzeuges zum Aufpressen der Klemmhülse alleine muß der Bund nicht so hoch sein. Je höher, bzw. je größer im Durchmesser der Bund auszuführen ist, umso mehr steigen die Herstellungskosten des Klemmverbinders.

Der Erfindung liegt daher die Aufgabe zu Grunde, einen Klemmverbinder zu schaffen, der die Nachteile der vorbekannten vermeidet und der insbesondere selbst und auch in seinen Herstellungskosten preisgünstiger ist.

Diese Aufgabe wird nach der Erfindung durch das kennzeichende Merkmal von Anspruch 1 gelöst.

Dies hat den Vorteil eines geringeren Gewichts mit einem entsprechenden Einfluß auf Materialkosten, Transport, Handhabung, kleinere Produktionsmaschinen mit geringeren Kosten, weniger Zerspanarbeit bzw. schnellerem Durchlauf mit weniger Spänen.

In den Unteransprüchen sind weitere Fortbildungen der Erfindung beschrieben.

In den Zeichnungen sind Ausführungsbeispiele der Erfindung wiedergegeben. Es zeigen jeweils axial halbseitig :
- Fig. 1: eine Seitenansicht der Stützhülse mit einem Längsschnitt durch die Muffe,
- Fig. 2: eine Seitenansicht der Stützhülse mit einem Längsschnitt durch die Muffe und einen Längsschnitt durch die Klemmhülse, die etwa in halber Aufpreßstellung sich befindet,
- Fig. 3: wie Figur 2, jedoch mit der Klemmhülse in vollständiger Aufpreßstellung,
- Fig. 4: eine Stützhülse mit einer Hohlkehle im Bund,
- Fig. 5: einen vollständigen Längsschnitt durch die Klemmhülse,
- Fig. 6: eine Seitenansicht der Stützhülse mit einem Teilschnitt durch den Bund, mit Muffe und einer Klemmhülse mit zylindrischer Endbohrung in Aufpreßstellung und
- Fig. 7: eine Seitenansicht der Stützhülse mit einem Teilschnitt durch den Bund, mit Muffe und einer Klemmhülse mit kurvenförmig erweiterter Endbohrung in Aufpreßstellung.

Der Klemmverbinder 1 besteht aus einer Stützhülse 2, auf die eine am Rohr- oder Schlauchende 4 angeformte Muffe 41 aufgesteckt ist.Die Stützhülse 2 ist mit zylindrischen kreisförmigen Rippen 21 versehen. Ferner ist ein Bund 22 vorhanden, an den die Muffe 41 anstößt. Über die Muffe 41 wird mit einem in den Zeichnungen nicht dargestellten Preßwerkzeug eine Klemmhülse 3 geschoben, die die Muffe 41 mit Preßsitz umgreift. Der Klemmverbinder 1 mit der metallischen Stützhülse 2 und der Klemmhülse 3 ist für Rohre oder Schläuche 4 aus polymeren Werkstoffen geeignet, darunter besonders für solche aus vernetztem Polyethylen (Kurzbezeichnung: VPE, neuerdings PE-X). VPE weist Eigenschaften auf, die zwischen denen eines thermoplastischen Werkstoffes, wie Polyethylen, und eines elastischen Werkstoffes, wie Gummi,liegen.

Zur Herstellung der Verbindung muß eine zylindrische Muffe 41 am Rohrende 4 angeformt werden. Dieses ist bei den für die Leitungsverlegung üblichen Temperaturen mit einem mechanischen Werkzeug möglich. Dehnungen von 20% werden vom Werkstoff schadlos aufgenommen. Die Muffe 41 muß über den Durchmesser der Stützhülse 2, auf den sie aufzustecken ist, hinaus aufgeweitet werden. Nach dem Herausnehmen des Aufweitungswerkzeuges setzt sofort die Schrumpfung der Muffe 41 ein. Bis zu 10 Sekunden werden benötigt, um das Rohr oder den Schlauch 4 mit der angeformten Muffe 41 auf die Stützhülse 2 des Klemmverbinders 1 zu stecken. Das bei der Herstellung der Verbindung anfallende überschüssige Muffenmaterial wird von der Klemmhülse 3 lediglich verdrückt, keinesfalls abgeschert oder sonstwie geschädigt. Die Muffe 41 paßt sich den Konturen der Stützhülse 2 und der Klemmhülse 3 an, ohne daß der Werkstoff Schaden nimmt.

Die Muffe 41 hat das Bestreben, sich auf den Rohr- bzw. Schlauchdurchmesser zurückzustellen, Sie preßt sich auf die Rippen 21 der Stützhülse 2. Ohne die aufgepreßte Klemmhülse 3 ist bereits eine Dichtwirkung vorhanden. Die Schrumpfkraft der Muffe 41 erschwert andererseits das Abfließen von Material aus dem Klemmbereich.

Der Werkstoff VPE neigt nicht zum Ein- und Weiterreißen. Die Stützhülse 2 kann daher mit eckigen Stegen und/oder tiefen Nuten ausgeführt werden. Die dadurch erreichbaren hohen Kantenpressungen und Verankerungen kommen der Dichtwirkung und Längskraftschlüssigkeit der Verbindung entgegen.

Rohre und Schläuche 4 aus dem Werkstoff VPE sind in der Lage, die bei der Trinkwasserversorgung in Gebäuden auftretenden Drücke und Temperaturen mit der erforderlichen Sicherheit und Lebensdauer aufzunehmen. VPE hat jedoch eine größere temperaturbedingte Volumenausdehnung als Metall. Bei Erwärmung kann daher das sich zwischen den metallischen Bauteilen befindliche Material zwar verdrückt werden, es neigt aber dazu, sich wieder in die innegehabte Lage zurückzuorientieren.

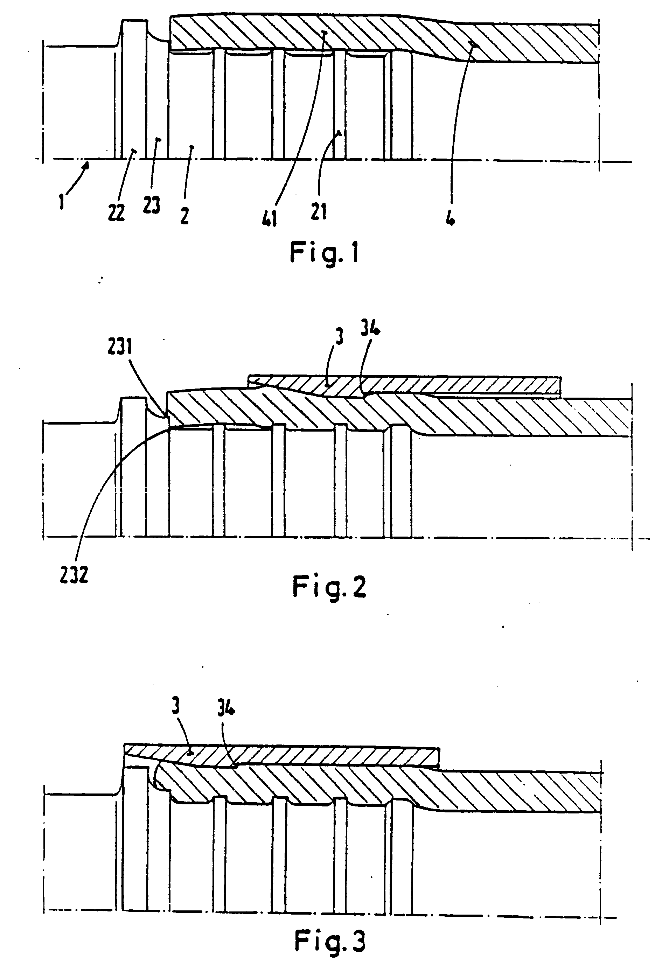

In Figur 2 ist die Klemmhülse 3 während des Überpreßvorganges und in Figur 3 in ihrer endgültigen Lage wiedergegeben. Die konstruktive Gestaltung des Klemmverbinders 1 sollte so erfolgen, daß die Verlagerung von Rohr- oder Schlauchmaterial im Klemmbereich begrenzt ist. Es ist deshalb darauf zu achten, daß der Klemmverbinder 1 ohne Hohlräume im Klemmbereich hergestellt ist. Die drei den Klemmverbinder 1 bildende Bauteile 2, 3, 4 sind deshalb so abgestimmt, daß selbst bei ungünstiger Toleranzbildung keine Hohlräume entstehen können. Das bedeutet aber auf der anderen Seite, daß überschüssiges Muffenmaterial anfällt. In den Figuren 1, 2 und 3 ist die Stützhülse 2 als erste Ausführungsform mit einer Kehle 23 versehen. Bei dieser Ausführungsform dient die Kehle 23 zur Aufnahme des beim Aufpreßvorgang anfallenden überschüssigen Muffenmaterials. Die Kehle 23 ist drehtechnisch leicht herzustellen und kann als eine Verstärkung des Bundes 22 angesehen werden. Daher kann der Klemmverbinder 1 mit der Stützhülse 2 nach den Figuren 1, 2 und 3 relativ kurz gehalten werden.

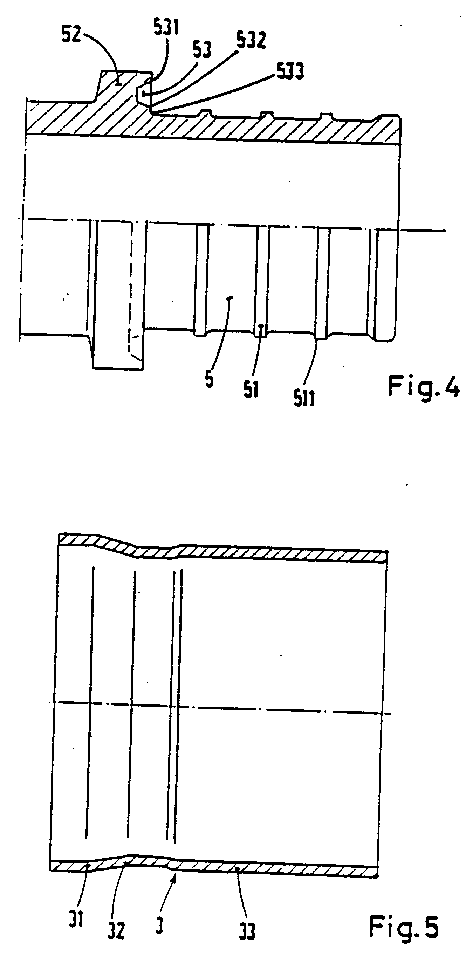

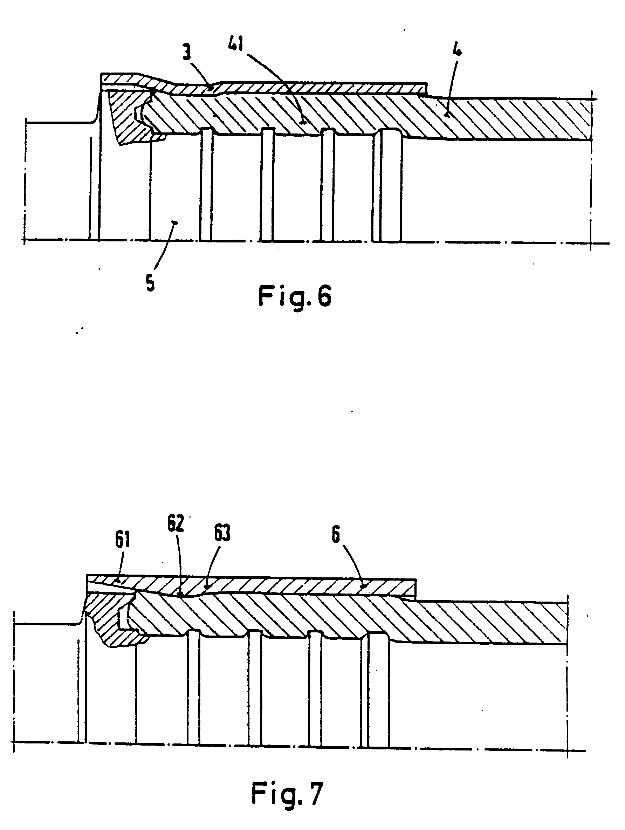

In den Figuren 4, 6 und 7 ist als zweite Ausführungsform die Stützhülse 5 mit einer Hohlkehle 53 wiedergegeben. Bei dieser Ausführungsform dient die Hohlkehle 53 im Bund 52 als Aufnahmeraum für das überschüssige Muffenmaterial. Würde dieser Aufnahmeraum nicht bereitstehen, könnte es zum Abquetschen von Muffenmaterial zwischen den metallischen Bauteilen Stützhülse 5, Klemmhülse 3 und/oder zum Verformen der metallischen Bauteilekommen und es würde eine höhere Aufpreßkraft für die Klemmhülse 3 erforderlich sein (Figuren 6, 7). Die Kanten 521, 522 (Fig. 4) stellen weitere Dichtkanten dar, also Zonen mit höherer Flächenpressung zusätzlich zu den Rippenkanten 511 auf der Stützhülse 5. Dieses gilt für den Fall, daß das Rohr- oder Schlauchende 4 bzw. die Muffe 41 genau rechtwinkelig zur Achse abgeschnitten ist, was mit einem entsprechenden Werkzeug ohne weiteres möglich ist. Das in die Hohlkehle 53 extrudierte Muffenmaterial (Figuren 6, 7) erhöht den Widerstand des Klemmverbinders 1 gegen ein Undichtwerden infolge einer Abwinkelung des geklemmten Rohres bzw Schlauches 4.

Die Kehle 23 zur Aufnahme des beim Herstellen der verbindung anfallenden überschüssigen Muffenmaterials ist drehtechnisch leichter anzubringen und schwächt den Bund 22 festigkeitstechnisch weniger als die Hohlkehle 53. Der Klemmverbinder mit der Kehle 23 kann daher letztlich kürzer gebaut werden als ein Klemmverbinder mit der Hohlkehle 53. Die den Bund 22 zu seinem Außendurchmesser hin verjüngende Kehle 23 kann jedoch nichts beitragen zur Verbesserung der Abwinkelbarkeit des Verbinders. Auch hat die Kehle 23 eine Dichtkante ( 231, 232; 531, 532, 533) weniger als die Hohlkehle 53. Ob die Hohlkehle 53 oder die Kehle 23 bei der Ausführung des Klemmverbinders 1 zum Tragen kommt, muß auf Grund der zu erwartenden Betriebsbedingungen der Leitung und des eingesetzten Werkstoffes des Rohres oder Schlauches 4 entschieden werden.

Bei dem Klemmverbinder 1 nach den Figuren 1 bis 6 geht die Klemmhülse 3 anschließend an ihre aufgekelchte öffnung 31 in eine zylindrische Bohrung 32 über, der sich dann, stufenförmig erweitert, eine bis zum Ende der Klemmhülse 3 laufende zylindrische Bohrung 33 oder der sich mehrere, jeweils stufenförmig erweiterte, bis zum Ende der Klemmhülse 3 laufende zylindrische Bohrungen anschließen. Wie aus Figur 3 zu ersehen ist, hindert die Stufe 34 die Klemmhülse 3 daran, zurückzurutschen.

Wie andererseits in Figur 7 dargestellt ist, geht die Klemmhülse 6 anschließend an ihre aufgekelchte öffnung 61 in eine zylindrische Bohrung 62 über, an die sich bis zum Ende der Klemmhülse 6 eine konisch oder kurvenförmig erweiterte Bohrung 63 anschließt.

Der Klemmverbinder 1 kann für Trinkwasserleitungen und Heizkörperanschlußleitungen in Gebäuden eingesetzt werden. Es ist davon auszugehen,daß diese Leitungen mit wechselnden Drücken und Temperaturen betrieben werden. Da das Muffenmaterial aus dem polymeren Werkstoff VPE eine größere temperaturbedingte Ausdehnung hat als das der sie umgebenden metallischen Bauteile, wird beim Erwärmen ein Überschuß an Muffenmaterial auftreten. Dieses kann in noch verbliebene Hohlräume auf der Stützhülse 2, 5 und der Klemmhülse 3, 6 oder in die Aufnahmekammern, die in der beschriebenen Form als Kehle 23 oder Hohlkehle 53 gestaltet ist, verdrückt werden, aber auch auf die Rohr- oder Schlauchseite hin. Es ist deshalb nicht auszuschließen, daß die Preßkraft zwischen der Muffenaußenseite und der Klemmhülse 3; 6 im Laufe der Zeit etwas nachläßt. Es ist daher zweckmäßig, die Klemmhülse 3; 6 gegen ein Verschieben durch ihr Eigengewicht oder eine begrenzte äußere Kraft zu sichern. Herausgestellt werden soll, daß der für die Klemmverbindung besonders geeignete Werkstoff VPE auf Grund seiner Schrumpfkraft und seines elastisch ausgeprägten Verhaltens gegen ein Wegfließen beständig ist. Beim Abkühlen will sich das Muffenmaterial aus VPE auf die vor dem Erwärmen innegehabte Lage zurückstellen. Die Aufkelchung der Bohrung einerseits und die Stufe 34 bzw. die konische oder kurvenförmige Erweiterung 63 andererseits sichern die Klemmhülse 3; 6 gegen ein Verschieben durch ihr Eigengewicht oder eine begrenzte äußere Kraft axial nach zwei Seiten. Ob die innere Raumform der Klemmhülse 3; 6 nach den Figuren 5, 6 oder Figur 7 bei der Ausführung der Klemmhülse zum Tragen kommt, hängt vom Herstellungsverfahren ab. Die Kontur der inneren Raumform der Klemmhülse 3; 6 kann durch Ausdrehen oder Tiefziehen entsprechend geeigneter Ausgangswerkstoffe hergestellt werden.

## Patentansprüche

1. Zweiteiliger metallischer Klemmverbinder (1) in einer Verbindung von Rohren oder Schläuchen, wobei die Rohre und Schlauche aus polymerem Werkstoff bestehen und der Klemmverbinder mit einer zylindrischen, gerippten, einen Bund (22) aufweisenden Stützhülse (2;5) versehen ist, auf welche eine am Rohr- oder Schlauchende angeformte Muffe (41) steckbar ist, und einer auf das Rohr oder den Schlauch gesteckten, verschiebbaren Klemmhülse (3;6), die zur Herstellung der Verbindung über die aufgesteckte Muffe preßbar ist, wobei die Bohrung der Klemmhülse so ausgebildet ist, daß vom Rohr- oder Schlauchmaterial der Muffe sämtliche Hohlräume zwischen Stützhülse und Klemmhülse verfüllt werden, und wobei die Klemmhülse (3, 6) während des Verbindungsvorgangs durch Verschieben über die vor dem Steckvorgang angeformte Muffe in eine Endlage bringbar ist und der innere Durchmesser des zur Muffe hin gerichteten Endes der Klemmhülse sich zur Muffe hin konisch erweitert dadurch gekennzeichnet, daß die Klemmhülse in ihrer Endlage den Bund (22) übergreift.

2. Klemmverbinder nach Anspruch 1, dadurch gekennzeichnet, daß der Bund (22) an der der Muffe (41) zugewandten Flanke eine halbkreisförmig ausgebildete, den Bund (22) nach außen hin verjüngende Kehle (23) aufweist.

3. Klemmverbinder nach Anspruch 1, dadurch gekennzeichnet, daß der Bund (52) in der der Muffe (41) zugewandten Flanke eine umlaufende Hohlkehle (53) aufweist, deren Öffnung kleiner ist, als die Wandstärke der Muffe (41).

4. Klemmverbinder nach Anspruch 1, dadurch gekennzeichnet, daß die Klemmhülse (3) anschließend an ihre aufgekelchte Öffnung (31) in eine zylindrische Bohrung (32) übergeht, der sich dann stufenförmig erweitert, eine bis zum Ende der Klemmhülse (3) laufende zylindrische Bohrung (33) anschließt oder sich mehrere, jeweils stufenförmig erweiterte, bis zum Ende der Klemmhülse (3) laufende zylindrische Bohrungen anschließen (Fig. 5).

5. Klemmverbinder nach Anspruch 1, dadurch gekennzeichnet, daß die Klemmhülse (6) anschließend an ihre aufgekelchte Öffnung (61) in eine zylindrische Bohrung (62) übergeht, an die sich bis zum Ende der Klemmhülse (6) eine konisch oder kurvenförmig erweiterte Bohrung (63) anschließt (Fig. 7).

## Claims

1. Two-part metal compression sleeve joint (1) for connecting pipes or tubes whereby the pipes and tubes consist of polymer material and the compression sleeve joint exhibits a cylindrical, ribbed and collared (22) support sleeve (2; 5) onto which a socket (41), formed at the end of the pipe or tube, can be push-fitted and over which a compression sleeve (3; 6), sliding over the fitted socket, can be pressed in order to create the joint, whereby the bore of the compression sleeve is formed in such a way that the pipe or tube socket material fills all cavities between support sleeve and compression sleeve and whereby the compression sleeve (3, 6) can, during the jointing process, be moved into its home position by sliding it over the socket formed prior to the push-fit process and whereby the inside diameter of the end of the compression sleeve facing the socket flares out in conical fashion towards the socket, characterised by the fact that the compression sleeve envelops the collar (22) in its home position.

2. Compression sleeve joint as described in claim 1, characterised by the fact that the collar (22) on the side facing the socket (41) exhibits a semi-circular groove (23) tapering the collar (22) towards the outside.

3. Compression sleeve joint as described in claim 1, characterised by the fact that on the side facing the socket (41) the collar (52) exhibits a channel all the way round, the opening of which is smaller than the wall thickness of the socket (41).

4. Compression sleeve joint as described in claim 1, characterised by the fact that, starting at its flared opening (31) the compression sleeve (3) continues into a cylindrical bore (32), widens in stepped fashion, joins onto a cylindrical bore (33) extending as far as the end of the compression sleeve (3) or joins onto several cylindrical bores, each flaring in stepped fashion and extending as far as the end of the compression sleeve (3) (Fig. 5).

5. Compression sleeve joint as described in claim 1, characterised by the fact that, starting at its flared opening (61) the compression sleeve (6) continues into a cylindrical bore (62), onto which joins a conically or round flared bore (63) that extends as far as the end of the compression sleeve (6) (Fig. 7).

## Revendications

1. Raccord métallique par serrage (1) en deux partie dans un assemblage de tubes et tuyaux flexibles, les tubes et flexibles étant en matière polymère et le raccord métallique par serrage étant muni d'une douille support (2;5) cylindrique, nervurée, présentant une collerette (22), sur laquelle un manchon (41) façonné est enfichable sur l'extrémité du tube ou du flexible, et d'une douille de serrage (3;6) mobile, fixée sur le tube ou le flexible, qui, pour l'établissement de la liaison, peut être pressée sur le manchon installé, l'alésage de la douille de serrage étant constitué de telle sorte que tous les espaces creux entre la douille support et la douille de serrage puissent être remplis par du matériel de tubulure ou de tuyauterie du manchon et la douille de serrage (3, 6) pouvant être amenée dans une position fin de course pendant l'opération de liaison grâce au déplacement au dessus du manchon façonné avant l'opération d'embrochage-débrochage et le diamètre intérieur de l'extrémité de la douille de serrage orientée vers le manchon s'élargisse en forme de cône vers le manchon, caractérisé par le fait qu'à sa position fin de course, la douille de serrage chevauche la collerette (22).

2. Raccord de serrage selon la revendication 1, caractérisé par le fait que la collerette (22) présente, sur le flanc tourné vers le manchon (41), une gorge (23) réduisant la collerette vers l'extérieur et réalisée en demi-cercle.

3. Raccord de serrage selon la revendication 1, caractérisé par le fait que la collerette (52) dans le flanc tourné vers le manchon (41) présente une cannelure (53) tout autour dont l'ouverture est plus petite que l'épaisseur de la paroi du manchon (41).

4. Raccord de serrage selon la revendication 1, caractérisé par le fait qu'après son ouverture en forme de coupe (31), la douille de serrage (3) se convertit en un alésage cylindrique (32), auquel fait suite en s'élargissant en échelons, un alésage cylindrique (33) allant jusqu'à l'extrémité de la douille de serrage (3) ou auquel font suite plusieurs alésages cylindriques, s'élargissant respectivement en échelons, jusqu'à l'extrémité de la douille de serrage (3) (fig.5).

5. Raccord de serrage selon la revendication 1, caractérisé par le fait qu'après son ouverture en forme de coupe (61), la douille de serrage (6) se convertit en un alésage cylindrique (62), auquel fait suite un alésage élargi (63) de forme conique ou en courbe jusqu'à l'extrémité de la douille de serrage (63) (fig.7).
